# EUROPEAN PATENT SPECIFICATION

(11) **EP 2 876 021 B1**
(45) Date of publication and mention of the grant of the patent: **07.09.2016**
(21) Application number: 14165771.8
(22) Date of filing: 24.04.2014
(51) Int. Cl.: B62D 1/16

(54) **Retention bracket for steering column member**
Befestigungsarm für Lenksäulenelement
Support de rétention pour élément de colonne de direction

(30) Priority: 21.11.2013 US 201314086081; 21.11.2013 CA 2834010
(43) Date of publication of application: 27.05.2015
(73) Proprietor: Van-Rob Inc., Aurora, Ontario L4G 0A2 (CA)
(72) Inventor: Van Schaik, Lambertus S., Pickering, Ontario L1V 3G5 (CA); Wong, Wayne Wing Chun, Richmond Hill, Ontario L4B 2G1 (CA)
(74) Representative: Charlton, Peter John

(56) References cited:
- EP-A1- 1 142 772
- EP-A2- 2 436 579
- DE-A1- 4 232 846
- JP-A- H08 183 462
- US-B2- 8 029 045

## Description

### FIELD OF THE INVENTION

This invention relates to a retention bracket for coupling or securing a steering column member to a vehicle cross-support member at a mounting location. The invention further relates to a vehicle steering wheel arrangement which includes a plurality of retention brackets coupled to mounting locations provided on a vehicle cross-support member.

### BACKGROUND OF THE INVENTION

In the automobile industry, vehicle cross-support members, crossbeams, cross car beams, and other similar components (collectively referred hereinafter as "vehicle cross-support members" or "cross-support members") are utilized as part of the vehicular body structure. The vehicle cross-support member normally spans between or fastened to a pair of laterally disposed vertical pillars, or A-pillars, in the region below the windscreen, and between a forward engine compartment and a rearward passenger compartment, so as to extend in a direction transverse to the length of an automobile. As part of a motor vehicle body, the cross-support member provides for cross car stiffness and rigidity against for example side load impacts.

Located forwardly of the driver and the front-row passenger, the cross-support member also supports or provides mounting surfaces for various vehicle components, including an instrument panel, a glove and/or storage compartment, a center console, a dashboard and a steering column member. Although direct attachment may be possible, various attachment devices or assemblies could be utilized on the cross-support member to effect attachment of such vehicle components. The attachment devices and assemblies are preferably designed such that the noise and vibrations transferring from the vehicle engine, drivetrain, transmission or any other moving parts are reduced for optimal passenger comfort. Reduction of weight and production costs are also of important consideration in designing such attachment devices and assemblies.

A number of attachment assemblies for attaching the steering column member to the cross-support member are known. United States Patent No. 8,029,045 to Merkle discloses an integrated cross-support member design having an attachment device of a three-dimensional ribbed structure fastened to a crossbeam body. The attachment device of Merkle includes a plurality of vertically oriented blanks coupled to the crossbeam body in a distributed, side-by-side manner over a partial length thereof, and in an orientation extending transverse to the longitudinal axis of the crossbeam body to form a ribbed structure. Merkle describes that the ribbed structure provides multiple mounting locations for attachment elements, such as bushes and threaded pins, for attaching a vehicle component or a steering column to the crossbeam body. Specifically, Merkle describes that the attachment elements are coupled to two adjacent blanks in the gap between the blanks. Merkle further provides that for rigidity and stiffness, a bracing bar and rigid linking elements (to connect free ends of adjacent blanks) could be utilized.

Merkle suggests that such arrangements provide for improved stiffness and strength, as well as improved maximum mechanical load which may be placed on the attachment device. Merkle further suggests that the open structure of the attachment device allows for improved weight reduction, when compared to other known devices incorporating a closed structure.

It is believed that the attachment device of Merkle may suffer the disadvantages in that the individual blanks could be prone to transferring noise and vibrations from the engine compartment to the driver and the passenger compartment. Furthermore, the use of multiple blanks which must be fastened individually to the crossbeam body may require greater fabrication precision, and involve greater complexity and manufacturing costs. The vertically oriented blanks may also pose a serious safety concern for the driver, especially in the context of a head-on collision at higher speeds.

### SUMMARY OF THE INVENTION

One possible non-limiting object of the present invention is to provide a retention bracket for coupling a steering column member to a cross-support member, and which is for improving noise, vibration and harshness ("NVH") performance.

Another possible non-limiting object of the present invention is to provide a retention bracket for coupling a vehicle steering column member to a vehicle cross-support member, and which is for improving distribution of mechanical load, and for withstanding torsional moments generated by the steering column member.

Another possible non-limiting object of the present invention is to provide a retention bracket which allows for reduced manufacturing costs and simpler installation and design as a single pre-formed integral unit.

In view of the disadvantages of previously known devices, the present invention provides in one simplified aspect a retention bracket having a mounting shoe and a reinforcing rod, and which is for coupling a steering column member to a vehicle cross-support member.

In another aspect, the present invention provides a retention bracket for coupling a steering column member to a vehicle cross-support member, the cross-support member defining a mounting location having a downwardly oriented mounting surface disposed adjacent to and above a forwardly oriented mounting surface, the forwardly oriented mounting surface defining an aperture, the retention bracket comprising a mounting shoe and an axially extended reinforcing rod mechanically engageable by a threaded end of an attachment bolt in the securement of the steering column member to the retention bracket, wherein the mounting shoe comprises: a pair of laterally spaced gusset plates, each said gusset plate extending forwardly from a respective rear edge, and being integrally joined at respective forward portions by a forward end plate to define an open interior therebetween, wherein an upper edge of at least one of the gusset plates and the forward end plate is positionable in substantially abutting contact with the downwardly oriented mounting surface, and at least one of the rear edges is positionable in substantially abutting contact with the forwardly oriented mounting surface; and a lowermost flange extending inwardly along a bottom edge portion of a first one of the gusset plates towards the second other gusset plate to define a lowermost channel therebetween; and the reinforcing rod comprises at least one elongated reinforcement portion and a threaded bore portion, the threaded bore portion defining an internally threaded bore, wherein the reinforcing rod is positioned in the lowermost channel with an outer peripheral surface of the reinforcing rod being coupled to an inner end of the lowermost flange and a bottom edge of the second gusset plate; and wherein the threaded end of the attachment bolt is receivable through the aperture for complementary mated engagement with the internally threaded bore.

In yet another aspect, the present invention provides a vehicle steering wheel arrangement for mounting a steering column member, the arrangement comprising a vehicle cross-support member defining a plurality of longitudinally spaced mounting locations and a plurality of retention brackets welded to an associated one of the mounting locations, each said mounting location having a downwardly oriented mounting surface disposed adjacent to and above a forwardly oriented mounting surface, each said retention bracket comprising a mounting shoe and an axially extended reinforcing rod mechanically engageable by a threaded end of an attachment bolt in the securement of the steering column member to the arrangement, wherein the mounting shoe comprises: a pair of laterally spaced gusset plates, each said gusset plate extending forwardly from a respective rear edge weldable to the forwardly oriented mounting surface, and being integrally joined at respective forward portions by a forward end plate to define an open interior therebetween, wherein respective upper edges of the gusset plates and the end plate cooperatively define a partial upper rim welded to the downwardly oriented mounting surface; and a lowermost flange extending inwardly along a bottom edge portion of a first one of the gusset plates towards the second other gusset plate to define a lowermost channel therebetween; and the reinforcing rod is positioned in the lowermost channel with an outer peripheral surface of the reinforcing rod being welded to an inner end of the lowermost flange and a bottom edge of the second gusset plate, the reinforcing rod extending past a lower edge of the forward end plate in abutting contact therewith, wherein the reinforcing rod comprises at least one elongated reinforcement portion and a threaded bore portion, the at least one reinforcement portion defining a generally hollow interior, and comprising external and internal cross sections independently selected from the group consisting of a circle, an ellipse, a square, a rectangle, a hexagon and an octagon; and the threaded bore portion defining an internally threaded bore; wherein the threaded end of the attachment bolt is receivable through the aperture for complementary mated engagement with the internally threaded bore.

Preferably, the arrangement comprises two said retention brackets for mounting the steering column member therebetween, and wherein the lowermost flange of each said retention bracket extends inwardly towards the other retention bracket. In an alternative embodiment, the lowermost flange of each retention bracket extends outwardly away from the other retention bracket. In a further alternative embodiment, the lowermost flange of a first one of the retention brackets extends inwardly towards the second other retention bracket, and the lowermost flange of the second other retention bracket extends outwardly away from the first retention bracket.

The internally threaded bore preferably comprises a thread length of about 5 threads to 10 threads, and most preferably 7 threads, where heat treatment may not be necessary when preparing the reinforcing rod.

In one embodiment, the plates are oriented in a generally parallel relationship with each other. In an alternative embodiment, the plates are provided in a non-parallel orientation to each other. It is to be appreciated that the plates are not limited or intended to limited as having equal or similar dimensions or configurations, and may vary for example to accommodate differing orientations and dimensions of the mounting surfaces.

The reinforcing rod preferably further comprises on a rearward axial end a rearward facing shoulder integrally joined to a generally hollow cylindrical portion, the cylindrical portion being sized for insertion at least partially in the aperture with the shoulder seated around a circumferential edge of the aperture, and wherein the threaded bore portion extends towards the rearward axial end and through the cylindrical portion.

Most preferably, the cylindrical portion is axially aligned with the reinforcement portion. The shoulder is most preferably weldable to the circumferential edge of the aperture in the seated arrangement. In an alternative embodiment, the reinforcing rod is provided without the shoulder or the cylindrical portion, and the axial end or the rearward axial end is weldable to the circumferential edge of the aperture.

The location of the threaded bore portion in the reinforcing rod is not particularly limited. The threaded bore portion may be disposed in the reinforcing rod on or adjacent to an axial end, or a rearward or forward axial end, or between the axial ends.

The elongated reinforcement portion preferably defines a generally hollow interior, and comprises external and internal cross sections independently selected from the group consisting of a circle, an ellipse, a square, a rectangle, a hexagon and an octagon. The reinforcing rod most preferably comprises a reinforcing cylinder defining a generally hollow interior extending between the two axial ends, and which includes substantially circular external and internal cross sections. It is to be appreciated that the external and internal cross sections are not restricted to the aforementioned preferred shapes, and may furthermore be selected from other known geometric or combinations of geometric shapes, such as oval, parallelogram, trapezoid, triangle, rhombus, pentagon, heptagon, nonagon, decagon and others.

Preferably, the forward end plate of the mounting shoe is angled rearwardly towards a lower edge of the forward end plate, and the reinforcing rod extends past the lower edge in abutting contact therewith or to provide a weldable interface, such that improved load distribution may be obtained. Respective upper edges of the gusset plates and the forward end plate most preferably cooperatively define a partial upper rim shaped for substantially abutting contact with the downwardly oriented mounting surface.

Preferably, a longitudinal axis of the reinforcing rod is positionable in a substantially normal orientation to the forwardly oriented mounting surface . Alternatively, the reinforcing rod may be positionable at an angled, non-perpendicular orientation to the forwardly oriented mounting surface

Most preferably, the mounting shoe and the reinforcing rod are welded together to form a single pre-formed integral unit. The welding method for forming the integral retention bracket unit is not particular limited, as long as the method operates to couple the mounting shoe and the reinforcing rod. Such welding methods may include but not limited to electric resistance welding, shielded metal arc welding, gas metal arc welding, submerged arc welding, flux-cored arc welding, electroslag welding, laser beam welding, electron beam welding, electromagnetic pulse welding, friction stir welding, cold metal transfer welding and any other welding processes known in the relevant arts.

In an alternative embodiment, the mounting shoe and the reinforcing rod may be assembled using other known joining methods including but not limited to bonding, crimping, clinching, riveting and screwing.

The materials for preparing the individual components of the retention bracket are not particularly limited. Possible materials include steel, aluminum, iron, magnesium, carbon fiber, high strength polymers or plastics and any combinations or alloys thereof. In a most preferred embodiment, the reinforcing rod comprises a cold-formed or raw-formed steel having a steel grade between about AISI 1008 and about AISI 1018, or most preferably about AISI 1010. For ease and reduce cost of manufacturing, the mounting shoe may be prepared as a machine stamped component or by die casting.

The forwardly oriented mounting surface is not particularly limited, and may be defined by the steering column member , or a structural component thereof included for effecting engagement with the retention bracket. In a most preferred embodiment, the mounting location further includes a rearwardly oriented mounting surface, and the retention bracket is for use with a mounting plate, the mounting plate comprising a forward attachment surface having generally planar upper and lower portions, wherein the lower portion defines the forwardly oriented mounting surface, and wherein in a mounted arrangement the upper portion is attachable to at least part of the rearwardly oriented mounting surface, and the lower portion is positionable in substantially abutting contact with at least one of said rear edges of the gusset plates and the reinforcing rod.

Furthermore, in a most preferred embodiment, each said mounting location further includes a rearwardly oriented mounting surface, and the retention bracket is for use with a mounting plate, the mounting plate comprising a forward attachment surface having generally planar upper and lower portions, wherein the lower portion defines the forwardly oriented mounting surface, and wherein in a mounted arrangement the upper portion is attachable to at least part of the rearwardly oriented mounting surface.

Additional and alternative features of the present invention will be apparent to a person skilled in the art from the following detailed description of the preferred embodiments thereof.

### BRIEF DESCRIPTION OF THE DRAWINGS

Reference may now be had to the following detailed description taken together with the accompanying drawings in which:
Figure 1 is a side view of a retention bracket in accordance with a preferred embodiment of the present invention, and which is shown in use with a vertically oriented coupling plate for coupling a vehicle steering column member to a vehicle cross-support member;
Figure 2 is a perspective view of the retention bracket and the coupling plate shown in Figure 1;
Figure 3 is a perspective view of the vertically oriented coupling plate shown in Figure 1;
Figure 4 is a perspective view of a load bearing mounting shoe of the retention bracket shown in Figure 1;
Figure 5 is another perspective view of the mounting shoe shown in Figure 4;
Figure 6 is a perspective view of an elongated fastening cylinder of the retention bracket shown in Figure 1;
Figure 7 is a cross-section view of the elongated fastening cylinder taken along the line A-A as shown in Figure 6;
Figure 8 is a front view of the retention bracket and the coupling plate shown in Figure 1, and which are welded to a vehicle cross-support member;
Figure 9 is a perspective view of a vehicle steering wheel arrangement having a pair of retention brackets in use with associated vertically oriented coupling plates, and which are welded to a vehicle cross-support member in accordance with a preferred embodiment of the present invention; and
Figure 10 is another perspective view of the preferred vehicle steering wheel arrangement shown in Figure 9.

### DETAILED DESCRIPTION OF THE PREFERRED EMBODIMENTS

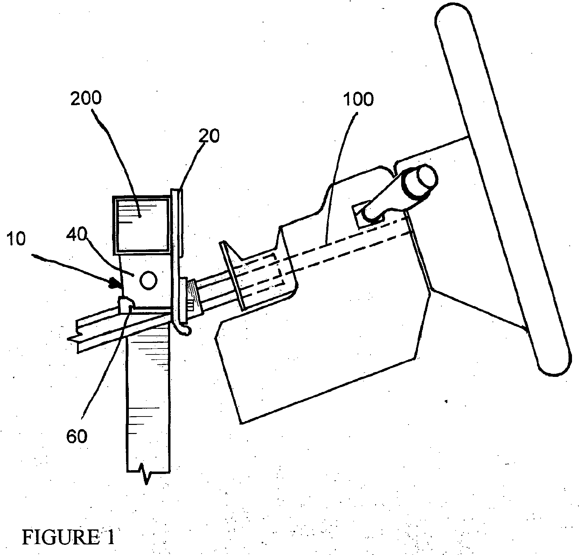

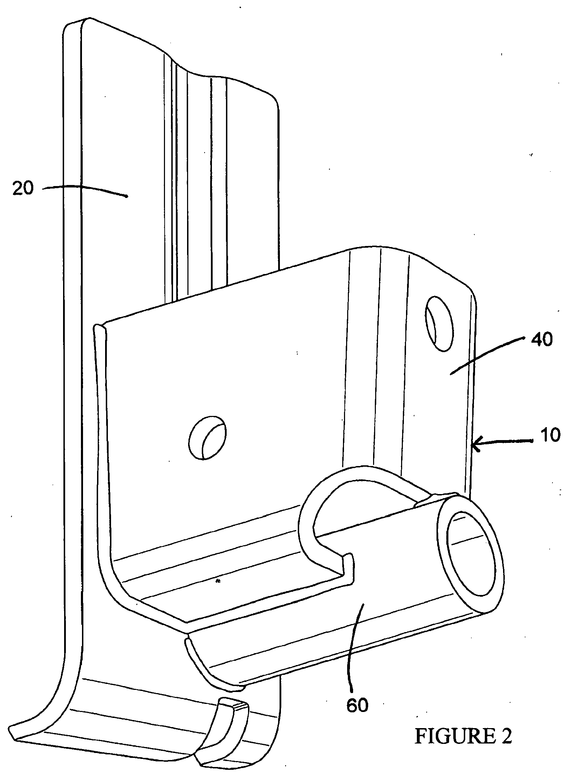

Reference is made to Figure 1 which shows a side view of a retention bracket 10 for use with a vertically oriented coupling plate 20 in coupling a vehicle steering column member 100 to a vehicle cross-support member 200 in accordance with a preferred embodiment of the present invention. As will be described, the retention bracket 10 includes a load bearing mounting shoe 40 and an elongated fastening cylinder 60. For greater clarity, Figure 2 separately illustrates a fully assembled retention bracket 10 in which the shoe 40 and the cylinder 60 are welded together with the coupling plate 20 to form a single integral unit.

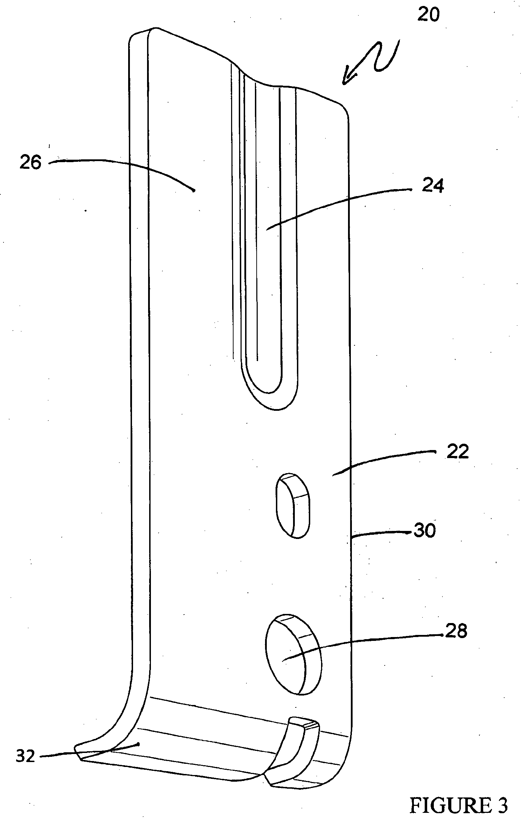

As seen in Figure 3, the coupling plate 20 has a generally rectangular backing portion 22 which is formed having a generally planar configuration along its lower portion, and which may have formed therein one or more stamped reinforcing ribs 24 for improved structural rigidity. The backing portion 22 defines a forwardly oriented weldable surface 26 and a rearward steering column mounting surface (not shown) opposed to the weldable surface 26. The backing portion 22 further defines in the lower portion an aperture 28 offset towards a lateral edge 30, and which extends between the weldable surface 26 and the opposed rearward surface. A rearwardly projecting cradling lip 32 is integrally formed at a bottom edge of the coupling plate 20.

Although not strictly limited, the coupling plate 20 preferably extends vertically between about 5 cm and about 15 cm in length and between about 2 cm and about 7 cm in width, and more preferably between about 7 cm and about 12 cm in length and between about 3 cm and about 5 cm in width. The coupling plate 20 preferably has a thickness between about 0.1 cm and 1 cm.

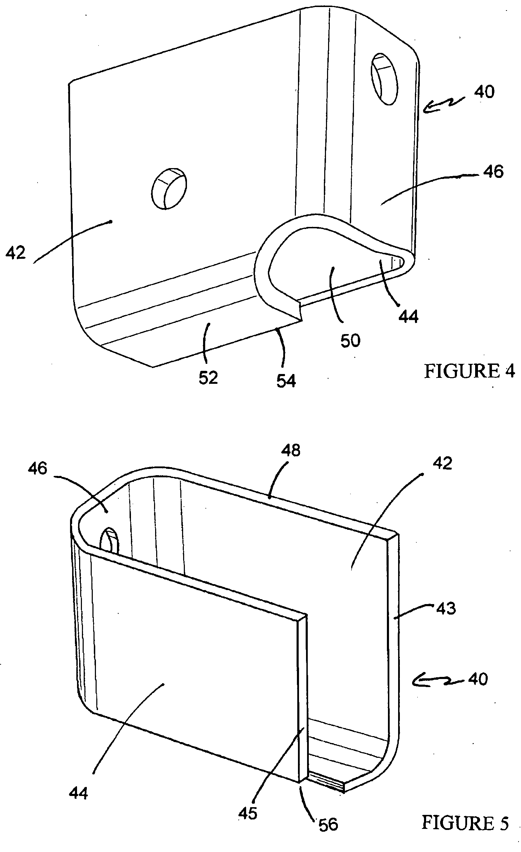

Reference is made to Figures 4 which shows a perspective view of the load bearing mounting shoe 40. The mounting shoe 40 is formed from a single stamped metal piece, and most preferably is comprised of cold-formed or raw-formed steel. The mounting shoe 40 includes a pair of generally parallel gusset plates 42, 44 each extending forwardly between about 2 cm and about 7 cm from their respective rear edges 43, 45 (shown in Figure 5). The gusset plates 42, 44 are laterally spaced between about 1 cm and 6 cm, and are integrally merged at their forward edges with a transverse forward end plate 46. The forward end plate 46 is angled forwardly towards an upper edge at an inclination angle selected at between about 2° and 20°, and preferably at about 5°, such that with the retention bracket 10 mated to the cross-support member 200, the end plate 46 extends further forwardly on the cross-support member 200 than on the fastening cylinder 60. The respective upper edges of the gusset plates 42, 44 and the forward end plate 46 cooperatively define a generally planar, continuous U-shaped upper rim 48.

The gusset plates 42, 44 and the forward end plate 46 further cooperatively define an open interior 50. The gusset plate 42 includes a lowermost flange 52 extending along a lower portion thereof, so as to project inwardly between about 0.5 cm and about 4 cm towards the open interior 50 and the gusset plate 44, to an inner end 54. The inner end 54 does not fully extend to contact the gusset plate 44, such that a cylinder receiving channel 56 is defined therebetween.

In an alternative embodiment, the gusset plate 44 includes the lowermost flange 52 extending along its lower portion, and projecting inwardly towards the open interior 50 and the gusset plate 42.

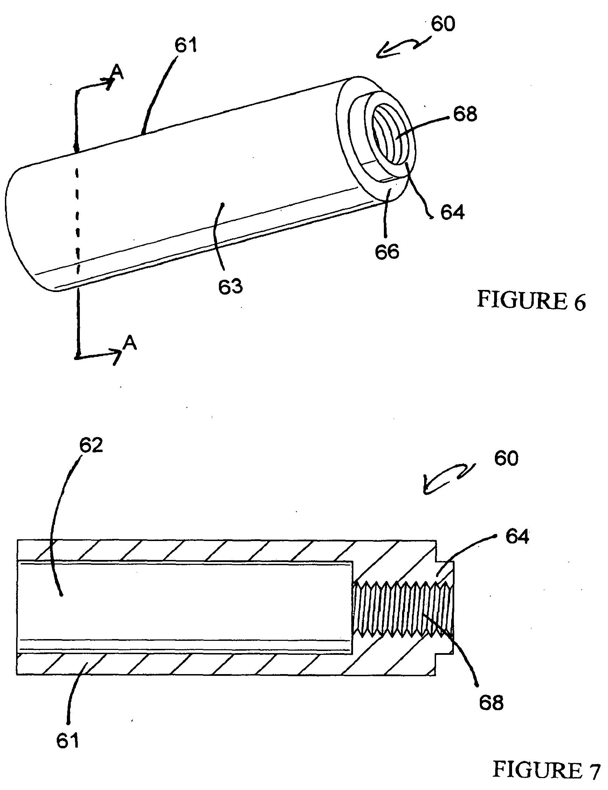

Reference is made to Figure 6 which illustrates a perspective view of the elongated fastening cylinder 60 in accordance with a preferred embodiment of the present invention. The fastening cylinder 60 includes a cylindrical body 61 defining an axially extended hollow interior 62 and an outer peripheral surface 63 which is circular in cross section normal to the axis of the cylinder 60. The cylindrical body 61 includes at an axial end a reduced diameter portion 64 integrally joined thereto with a shoulder 66. As best seen in Figure 7, the rearward end of the cylindrical body 61 and the reduced diameter portion 64 define an internally threaded bore surface 68 which extends axially to open to a rearward end of the reduced diameter portion 64. The cylindrical body 61 preferably extends axially between about 3 cm and about 10 cm from the shoulder 66. The outer diameter of the outer peripheral surface 63 is preferably between about 1 cm and about 4 cm, and larger than that of the reduced diameter portion 64 which is preferably between about 0.5 cm and about 2.5 cm. The reduced diameter portion 64 preferably extends rearwardly between about 0.1 cm and about 0.5 cm.

For assembly, the reduced diameter portion 64 of the fastening cylinder 60 is inserted into the aperture 28 of the coupling plate 20, such that the shoulder 66 is seated around a circumferential edge of the aperture 28. With the reduced diameter portion 64 received in the aperture 28, the fastening cylinder 60 is secured to the weldable surface 26 by weldments extending circumferentially about the outermost circumference of the shoulder 66. With the upper rim 48 oriented upwardly, the rear edges 43, 45 of the gusset plates 42, 44 are positioned in juxtaposition with the weldable surface 26, such that the rear edges 43, 45 are aligned generally parallel to the lateral edge 30, and the inner end 54 of the lowermost flange 52 and the bottom edge of the gusset plate 44 are adjacent to or in physical contact with the outer peripheral surface 63. Once the fastening cylinder 60 is oriented in position within the cylinder receiving channel 56 as such, to complete assembly the rear edges 43, 45 are then welded to the weldable surface 26 and the outer peripheral surface 63 to the inner end 54 and the bottom edge of the gusset plate 44.

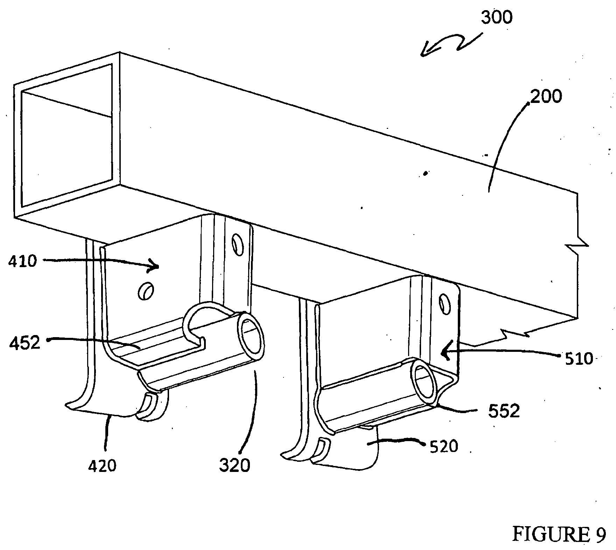

As shown in Figures 1 and 2, the fastening cylinder 60 extends past a lower edge of the forward end plate 46, so as to provide an additional weldable interface or abutting contact between the fastening cylinder 60 and the mounting shoe 40 for improved load distribution. Furthermore, in the fully assembled form the reduced diameter portion 64 does not protrude past the rearward mounting surface (best shown in Figure 9), such that the rearward surface is maintained as a generally planar surface.

It is to be appreciated that a person skilled in the art would readily appreciate other possible ways of preparing or assembling the retention bracket 10. For example, the fastening cylinder 60 may be welded to the mounting shoe 40 first to form the retention bracket 30, and the retention bracket 30 can then be welded to the coupling plate 20. Alternatively, the mounting shoe 40 may be welded to the coupling plate 20 first, followed by welding of the fastening cylinder 60 to the coupling plate 20 and the mounting shoe 40.

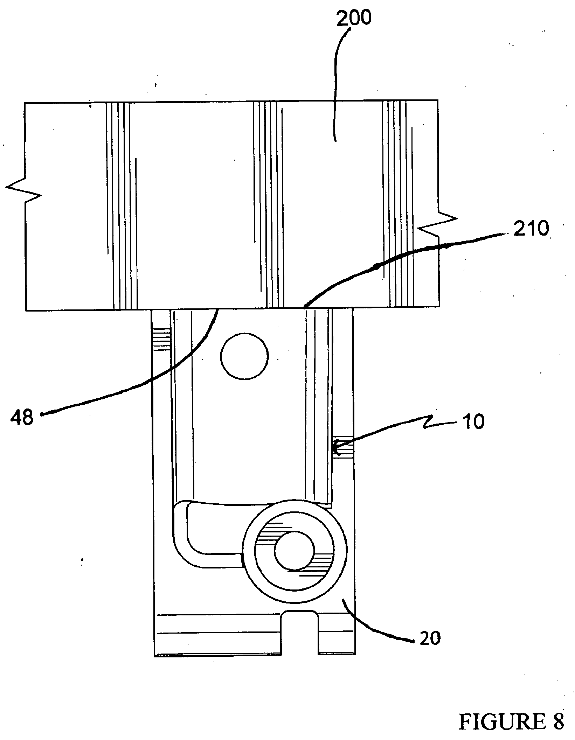

In operation, to mount the steering column member 100 in an automobile, the fully assembled retention bracket 10, together with the coupling plate 20 are welded to the vehicle cross-support member 200 at a mounting location having a rearwardly oriented mounting surface (not shown) and a downwardly oriented mounting surface 210 as seen in Figure 8. In particular, an upper portion of the weldable surface 26 of the coupling plate 20 is welded to the rearwardly oriented mounting surface, and the upper rim 48 of the mounting shoe 40 to the downwardly oriented mounting surface 210. When welded to the mounting location, the internally threaded bore surface 68 of the fastening cylinder 60 is in position to receive an externally threaded end of an attachment bolt in securing the steering column member 100 thereto.

It has been appreciated that the combination of the mounting shoe 40 and the fastening cylinder 60 of the invention may provide for improved load distribution and NVH performance of the steering column member 100 mounted with the retention bracket 10.

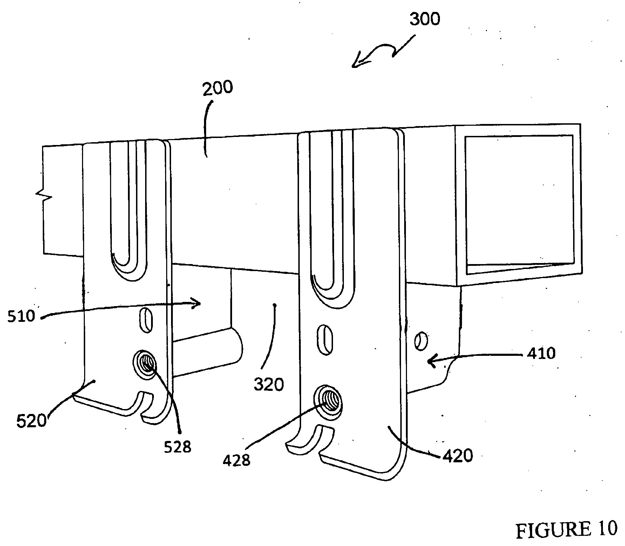

Reference is made to Figure 9 which shows a perspective view of a preferred vehicle steering wheel mounting arrangement 300 which includes the vehicle cross-support member 200 and a pair of longitudinally spaced retention brackets 410, 510 and associated vertically oriented coupling plates 420, 520 welded to the cross-support member 200. As seen in Figure 10, respective apertures 428, 528 defined by the coupling plates 420, 520 are offset towards a center steering column mounting area 320, such that respective lowermost flanges 452, 552 extend inwardly towards the same. It has been appreciated that such arrangement of the retention brackets 410, 510, and the inwardly extending lowermost flanges 452, 552 may provide for further improved load distribution and NVH performance.

It is to be appreciated that although the retention bracket 10, 410, 510 has been described with respect to a most preferred use with the coupling plate 20, 420, 520 in mounting the steering column member 100 to the vehicle cross-support member 200, the retention bracket 10, 410, 510 is not or intended to be limited solely to such use. In particular, the retention bracket 10, 410, 510 could also permit uses in mounting or coupling other mechanical components or objects at a mounting location with an attachment bolt, where the mounting location most preferably includes a generally planar mounting surface oriented at an angle to another mounting surface. Furthermore, it is to be appreciated that the retention bracket 10, 410, 510 does not necessarily require the preferred mounting orientations illustrated in Figures 1, 9 and 10. Specifically, in alternative embodiments, the reinforcing cylinder may be oriented vertically, horizontally or at any other angles therebetween when welded or secured at a mounting location.

While the invention has been described with reference to preferred embodiments, the invention is not or intended by the applicant to be so limited. A person skilled in the art would readily recognize and incorporate various modifications, additional elements and/or different combinations of the described components consistent with the scope of the invention as described herein.

## Claims

1. A retention bracket (10) for coupling a steering column member (100) to a vehicle cross-support member (200), the cross-support member defining a mounting location having a downwardly oriented mounting surface (210) disposed adjacent to and above a forwardly oriented mounting surface, the forwardly oriented mounting surface defining an aperture (28),
the retention bracket comprising a mounting shoe (40) and an axially extended reinforcing rod (60) mechanically engageable by a threaded end of an attachment bolt in the securement of the steering column member (100) to the retention bracket (10), the mounting shoe (40) and the reinforcing rod (60) preferably being welded together to form a single pre-formed integral unit, wherein
the mounting shoe (40) comprises:
a pair of laterally spaced gusset plates (42,44), each of said gusset plates extending forwardly from a respective rear edge (43,45), said gusset plates (42, 44) being integrally joined at respective forward portions by a forward end plate (46) to define an open interior (50) therebetween, wherein an upper edge of at least one of the gusset plates and the forward end plate is positionable in substantially abutting contact with the downwardly oriented mounting surface (210), and at least one of the rear edge (43,45) is positionable in substantially abutting contact with the forwardly oriented mounting surface; and
a lowermost flange (52) extending inwardly along a bottom edge portion of a first one of the gusset plates (42,44) towards the second one of the gusset plates to define a lowermost channel (56) therebetween;
wherein
the reinforcing rod (60) comprises at least one elongated reinforcement portion (61) and a threaded bore portion defining an internally threaded bore (68), wherein the reinforcing rod (60) is positioned in the lowermost channel (56) with an outer peripheral surface (63) of the reinforcing rod being coupled to an inner end of the lowermost flange (52) and a bottom edge of the second gusset plate (42,44); and
wherein the threaded end of the attachment bolt is receivable through the aperture (28) for complementary mated engagement with the internally threaded bore (68).

2. The retention bracket of claim 1, wherein respective upper edges of the gusset plates (42,44) and the forward end plate (46) cooperatively define a partial upper rim (48) shaped for substantially abutting contact with the downwardly oriented mounting surface (210).

3. The retention bracket of claim 1 or claim 2, wherein the forward end plate (46) is angled rearwardly towards a lower edge of the forward end plate, and the reinforcing rod (60) extends past the lower edge in abutting contact therewith.

4. The retention bracket of any one of claims 1 to 3, wherein the mounting location further includes a rearwardly oriented mounting surface, and the retention bracket is for use with a mounting plate (20), the mounting plate comprising a forward attachment surface (26) having generally planar upper and lower portions, wherein the lower portion defines the forwardly oriented mounting surface, and wherein in a mounted arrangement the upper portion is attachable to at least part of the rearwardly oriented mounting surface, and the lower portion is positionable in substantially abutting contact with at least one of said rear edges (43,45) of the gusset plates (42,44) and the reinforcing rod (60).

5. The retention bracket of any one of claims 1 to 4, wherein the internally threaded bore (68) comprises a thread length of about 5 threads to about 10 threads.

6. The retention bracket of any one of the preceding claims, wherein the reinforcing rod (60) further comprises on an axial end a shoulder (66) integrally joined to a generally hollow cylindrical portion (64), the cylindrical portion being configured for insertion at least partially in the aperture (28) with the shoulder (66) seated around a circumferential edge of the aperture (28), and wherein the threaded bore portion extends towards the axial end and through the cylindrical portion (64).

7. The retention bracket of any one of the preceding claims, wherein the elongated reinforcement portion (61) defines a generally hollow interior (62), and comprises external and internal cross sections independently selected from the group consisting of a circle, an ellipse, a square, a rectangle, a hexagon and an octagon.

8. The retention bracket of any one of the preceding claims, wherein a longitudinal axis of the reinforcing rod (60) is positionable in a substantially normal orientation to the forwardly oriented mounting surface.

9. The retention bracket of any one of the preceding claims, wherein the reinforcing rod (60) comprises a cold-formed or raw-formed steel having a steel grade between about AISI 1008 to about AISI 1018.

10. A vehicle steering wheel arrangement for mounting a steering column member (100), the arrangement comprising a plurality of the retention brackets of any one of claims 1 to 9 and the vehicle cross-support member (200), wherein the cross-support member defines a plurality of the mounting locations spaced along a length of the cross-support member, and each of the retention brackets is secured to an associated one of the mounting locations.

11. The vehicle steering wheel arrangement of claim 10, wherein the arrangement comprises two of said retention brackets (410, 510) for mounting the steering column member (100) therebetween, and wherein the lowermost flange (452,552) of each of said retention brackets extends inwardly towards the other retention bracket.

## Patentansprüche

1. Halteklammer (10) zur Kopplung eines Lenksäulenelements (100) an ein Fahrzeug-Querträgerelement (200), wobei das Querträgerelement eine Montagestelle definiert, die eine nach unten gerichtete Montagefläche (210) aufweist, die benachbart zu und über einer nach vorne gerichteten Montagefläche angeordnet ist, wobei die nach vorne gerichtete Montagefläche eine Öffnung (28) definiert,
wobei die Halteklammer einen Montageschuh (40) und einen axial verlängerten Verstärkungsstab (60) umfasst, der mechanisch durch ein Gewindeende eines Befestigungsbolzens in der Befestigung des Lenksäulenelements (100) mit der Halteklammer (10) in Eingriff gebracht werden kann, wobei der Montageschuh (40) und der Verstärkungsstab (60) vorzugsweise miteinander verschweißt sind, um eine einzige vorgeformte integrale Einheit zu bilden, wobei
der Montageschuh (40) Folgendes umfasst:
ein Paar seitlich beabstandeter Knotenbleche (42, 44), wobei sich jedes der Knotenbleche von einer jeweiligen Hinterkante (43, 45) nach vorne erstreckt, wobei die Knotenbleche (42, 44) einstückig durch eine vordere Endplatte (46) an den jeweiligen vorderen Abschnitten verbunden sind, um einen offenen Innenraum (50) dazwischen zu definieren, wobei eine Oberkante von zumindest einem der Knotenbleche und der vorderen Endplatte im Wesentlichen in Stoßkontakt mit der nach unten gerichteten Montagefläche (210) positionierbar ist und zumindest eine der Hinterkanten (43, 45) im Wesentlichen in Stoßkontakt mit der nach vorne gerichteten Montagefläche positionierbar ist; und
wobei sich ein unterster Flansch (52) nach innen entlang eines Unterkantenabschnitts eines ersten der Knotenbleche (42, 44) in Richtung des zweiten der Knotenbleche erstreckt, um einen untersten Kanal (56) zu definieren;
wobei der Verstärkungsstab (60) zumindest einen länglichen Verstärkungsabschnitt (61) und zumindest einen Gewindebohrungsabschnitt umfasst, der eine Innengewindebohrung (68) definiert,
wobei der Verstärkungsstab (60) in dem untersten Kanal (56) positioniert ist, wobei eine äußere Umfangsfläche (63) des Verstärkungsstabs an ein inneres Ende des untersten Flansches (52) und eine Unterkante des zweiten Knotenblechs (42, 44) gekoppelt ist; und wobei das Gewindeende des Befestigungsbolzens für einen zusätzlichen gepaarten Eingriff mit der Innengewindebohrung (68) durch die Öffnung (28) aufgenommen werden kann.

2. Halteklammer nach Anspruch 1, wobei die jeweiligen Oberkanten der Knotenbleche (42, 44) und die vordere Endplatte (46) gemeinsam einen partiellen oberen Rand (48) definieren, der so geformt ist, dass im Wesentlichen ein Stoßkontakt mit der nach unten gerichteten Montagefläche (210) entsteht.

3. Halteklammer nach Anspruch 1 oder Anspruch 2, wobei die vordere Endplatte (46) nach hinten in Richtung einer Unterkante der vorderen Endplatte abgewinkelt ist und sich der Verstärkungsstab (60) über die Unterkante hinaus in Stoßkontakt damit erstreckt.

4. Halteklammer nach einem der Ansprüche 1 bis 3, wobei die Montagestelle ferner eine nach hinten gerichtete Montagefläche einschließt und die Halteklammer zur Verwendung mit einer Montageplatte (20) vorgesehen ist, wobei die Montageplatte eine vordere Befestigungsfläche (26) umfasst, die im Wesentlichen ebene obere und untere Abschnitte aufweist, wobei der untere Abschnitt die nach vorne gerichtete Montagefläche definiert und wobei der obere Abschnitt in einer montierten Anordnung an zumindest einem Teil der nach hinten gerichteten Montagefläche anbringbar ist und der untere Abschnitt im Wesentlichen in Stoßkontakt mit zumindest einer der Hinterkanten (43, 45) der Knotenbleche (42, 44) und dem Verstärkungsstab (60) positionierbar ist.

5. Halteklammer nach einem der Ansprüche 1 bis 4, wobei die Innengewindebohrung (68) eine Gewindelänge von ungefähr 5 Windungen bis zu ungefähr 10 Windungen umfasst.

6. Halteklammer nach einem der vorhergehenden Ansprüche, wobei der Verstärkungsstab (60) an einem axialen Ende ferner eine Schulter (66) aufweist,die einstückig mit einem im Wesentlichen hohlen zylindrischen Abschnitt (64) verbunden ist, wobei der zylindrische Abschnitt dazu konfiguriert ist, um zumindest teilweise in die Öffnung (28) eingefügt zu werden, wobei die Schulter (66) um eine Umfangskante der Öffnung aufliegt und wobei sich der Gewindebohrabschnitt in Richtung des axialen Endes und durch den zylindrischen Abschnitt (64) erstreckt.

7. Halteklammer nach einem der vorhergehenden Ansprüche, wobei der längliche Verstärkungsabschnitt (61) einen im Wesentlichen hohlen Innenraum (62) definiert und Außen- und Innenquerschnitte umfasst, die unabhängig voneinander aus der Gruppe bestehend aus einem Kreis, einer Ellipse, einem Quadrat, einem Rechteck, einem Sechseck und einem Achteck ausgewählt sind.

8. Halteklammer nach einem der vorhergehenden Ansprüche, wobei eine Längsachse des Verstärkungsstabs (60) in einer im Wesentlichen normalen Ausrichtung zu der nach vorne gerichteten Montagefläche positionierbar ist.

9. Halteklammer nach einem der vorhergehenden Ansprüche, wobei der Verstärkungsstab (60) einen kaltgeformten oder rohgeformten Stahl umfasst, der eine Stahlgüte zwischen ungefähr AISI 1008 und ungefähr AISI 1018 aufweist.

10. Fahrzeug-Lenkradanordnung zur Montage eines Lenksäulenelements (100), wobei die Anordnung eine Vielzahl von Halteklammern nach einem der Ansprüche 1 bis 9 und das Fahrzeug-Querträgerelement (200) umfasst, wobei das Querträgerelement eine Vielzahl der Montagestellen definiert, die entlang einer Länge des Querträgerelements beabstandet sind und jede der Halteklammern an einer zugeordneten der Montagestellen befestigt ist.

11. Fahrzeug-Lenkradanordnung nach Anspruch 10, wobei die Anordnung zwei der Halteklammern (410, 510) zur Montage des Lenksäulenelements dazwischen umfasst und wobei sich der unterste Flansch (452, 552) jeder der Halteklammern nach innen in Richtung der anderen Halteklammer erstreckt.

## Revendications

1. Un support de retenue (10) pour l'accouplement d'un élément de colonne de direction (100) sur un élément d'ancrage transversal (200) d'un véhicule, l'élément d'ancrage transversal définissant un emplacement de montage présentant une surface de montage (210) tournée vers le bas, adjacente à une surface de montage tournée vers l'avant et au-dessus de celle-ci, la surface de montage tournée vers l'avant définissant une ouverture (28),
le support de retenue comprenant un sabot de montage (40) et une tige de renforcement (60) déployée axialement, pouvant s'engager mécaniquement par une extrémité filetée d'un boulon de fixation lors de la fixation de l'élément de colonne de direction (100) sur le support de retenue (10), le sabot de montage (40) et la tige de renforcement (60) étant, de préférence, soudés ensemble afin de former un bloc intégral préformé unique, dans lequel le sabot de montage (40) comprend :
une paire de plaques-gousset (42, 44) espacées latéralement, chacune desdites plaques-gousset s'étendant vers l'avant relativement à un bord postérieur correspondant (43, 45), lesdites plaques-gousset (42, 44) étant jointes de façon intégrale à des parties antérieures respectives par une plaque d'extrémité antérieure (46), en définissant ainsi un intérieur ouvert (50) entre elles, un bord supérieur d'au moins une des plaques-gousset et la plaque d'extrémité antérieure pouvant être positionnés de façon à venir substantiellement buter contre la surface de montage (210) tournée vers le bas, et au moins un des bords postérieurs (43, 45) pouvant être positionné de façon à venir substantiellement buter contre la surface de montage tournée vers l'avant ; et
une bride inférieure (52) s'étendant vers l'intérieur le long d'un bord inférieur d'une première des plaques-gousset (42,44), en direction de la deuxième des plaques-gousset, en définissant ainsi, entre elles, un canal inférieur (56) ;
la tige de renforcement (60) comprenant au moins une partie de renforcement allongée (61) et une partie d'alésage fileté définissant un alésage taraudé (68).
la tige de renforcement (60) étant positionnée dans le canal inférieur (56), une surface périphérique extérieure (63) de la tige de renforcement étant accouplée avec une extrémité intérieure de la bride inférieure (52) et un bord inférieur de la deuxième plaque-gousset (42,44) ; et
l'extrémité filetée du boulon de fixation s'introduisant dans l'ouverture (28) pour un accouplement complémentaire avec l'alésage taraudé (68).

2. Le support de retenue selon la revendication 1, les bords supérieurs respectifs des plaques-gousset (42,44) et la plaque d'extrémité antérieure (46) définissant de façon coopérative un rebord supérieur partiel (48) façonné de façon à venir buter substantiellement contre la surface de montage (210) tournée vers le bas.

3. Le support de retenue selon la revendication 1 ou la revendication 2, la plaque d'extrémité antérieure (46) étant inclinée vers l'arrière, en direction d'un bord inférieur de la plaque d'extrémité antérieure, et la tige de renforcement (60) s'étendant au-delà du bord inférieur en venant buter contre celui-ci.

4. Le support de retenue selon une quelconque des revendications 1 à 3, l'emplacement de montage comprenant en outre une surface de montage tournée vers l'arrière, et le support de retenue devant être utilisé avec une plaque de montage (20), la plaque de montage comprenant une surface de fixation antérieure (26) possédant des parties supérieure et inférieure généralement planes, la partie inférieure définissant la surface de montage orientée vers l'avant, et dans un dispositif monté, la partie supérieure pouvant être fixée sur au moins une partie de la surface de montage tournée vers l'arrière, et la partie inférieure pouvant être positionnée de façon à buter substantiellement avec au moins un desdits bords postérieurs (43, 45) des plaques-gousset (42,44) et la tige de renforcement (60) :

5. Le support de retenue selon une quelconque des revendications 1 à 4, l'alésage taraudé (68) comprenant une longueur de filet égale allant d'environ 5 filets à environ 10 filets.

6. Le support de retenue selon une quelconque des revendications précédentes, la tige de renforcement (60) comprenant en outre, sur une extrémité axiale, un épaulement (66) accouplé de façon intégrale avec une partie cylindrique généralement creuse (64), la partie cylindrique étant configurée pour s'insérer tout au moins partiellement dans l'ouverture (28) avec l'épaulement (66) assis autour d'un bord circonférentiel de l'ouverture (28), et la partie de l'alésage taraudé s'étendant en direction de l'extrémité axiale et à travers la partie cylindrique (64).

7. Le support de retenue selon une quelconque des revendications précédentes, la partie de renforcement allongée (61) définissant un intérieur généralement creux (62) et comprenant des sections transversales externes et internes sélectionnées indépendamment du groupe composé d'un cercle, d'une ellipse, d'un carré, d'un rectangle, d'un hexagone et d'un octogone.

8. Le support de retenue selon une quelconque des revendications précédentes, un axe longitudinal de la tige de renforcement (60) pouvant être positionné dans une direction substantiellement perpendiculaire à la surface de montage tournée vers l'avant.

9. Le support de retenue selon une quelconque des revendications précédentes, la tige de renforcement (60) étant composée d'un acier formé à froid ou brut, d'une qualité comprise entre environ AISI 1008 et environ AISI 1018.

10. Un agencement pour volant de direction de véhicule, pour le montage d'une colonne de direction (100), l'agencement comprenant une pluralité de supports de retenue selon une quelconque des revendications 1 à 9 et l'élément de support transversal (200) du véhicule, l'élément de support transversal définissant une pluralité des emplacements de montage espacés le long d'une longueur de l'élément de support transversal, et chacun des supports de retenue étant fixé dans un emplacement connexe des emplacements de montage.

11. L'agencement pour volant de direction selon la revendication 10, l'agencement comprenant deux desdits supports de retenue (410, 510) pour le montage de l'élément de colonne de direction (100) entre eux, et la bride inférieure (452, 552) de chacun desdits supports de retenue s'étendant vers l'intérieur, en direction de l'autre support de retenue.
